(19)

**Europäisches Patentamt**

**European Patent Office**

**Office européen des brevets**

(11) **EP 2 183 625 B1**

(12) **EUROPEAN PATENT SPECIFICATION**

(45) Date of publication and mention
of the grant of the patent:
**21.12.2011 Bulletin 2011/51**

(51) Int Cl.:
*G02B 6/255* (2006.01)  *G02B 6/32* (2006.01)
*G02B 6/26* (2006.01)  *G02B 6/28* (2006.01)

(21) Application number: **08788639.6**

(22) Date of filing: **06.08.2008**

(86) International application number:
**PCT/GB2008/050668**

(87) International publication number:
**WO 2009/022164 (19.02.2009 Gazette 2009/08)**

(54) **IMPROVEMENTS RELATING TO PHOTONIC CRYSTAL WAVEGUIDES**

VERBESSERUNGEN IN BEZUG AUF WELLENLEITER MIT PHOTONISCHEM KRISTALL

AMÉLIORATIONS RELATIVES À DES GUIDES D'ONDES À CRISTAUX PHOTONIQUES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **10.08.2007 GB 0715505
10.08.2007 EP 07270041
06.06.2008 GB 0810375**

(43) Date of publication of application:
**12.05.2010 Bulletin 2010/19**

(73) Proprietor: **BAE Systems PLC
London SW1Y 5AD (GB)**

(72) Inventors:
• **STACEY, Craig, Daniel
Bristol
Avon BS34 7QW (GB)**
• **WATSON, Malcolm Anthony
Bristol
Avon BS34 7QW (GB)**

(74) Representative: **McBrien, Matthew Nicholas
BAE Systems plc
Group Intellectual Property Department
P.O. Box 87
Warwick House
Farnborough Aerospace Centre
Farnborough
Hampshire GU14 6YU (GB)**

(56) References cited:
**US-A1- 2003 113 063  US-A1- 2004 151 466
US-A1- 2007 104 431**

• **KUMAGAI S ET AL: "Wavelength division
multiplexer based on multi-mode interference
waveguide" LASERS AND ELECTRO-OPTICS,
2005. CLEO/PACIFIC RIM 2005. PACIFIC RIM CO
NFERENCE ON TOKYO, JAPAN 30-02 AUG. 2005,
PISCATAWAY, NJ, USA,IEEE, 30 August 2005
(2005-08-30), pages 301-303, XP010871853 ISBN:
978-0-7803-9242-7**
• **MA HUILIAN ET AL: "Compact and economical
MMI optical power splitter for optical
communication" COMMUNICATION
TECHNOLOGY PROCEEDINGS, 2000. WCC -
ICCT 2000. INTERNATI ONAL CONFERENCE ON
BEIJING, CHINA 21-25 AUG. 2000, PISCATAWAY,
NJ, USA,IEEE, US, vol. 2, 21 August 2000
(2000-08-21), pages 1561-1564, XP010526663
ISBN: 978-0-7803-6394-6**
• **JOHNSON E G ET AL: "Wavelength Tunable Fiber
Lens Based on Multimode Interference"
JOURNAL OF LIGHTWAVE TECHNOLOGY, IEEE
SERVICE CENTER, NEW YORK, NY, US, vol. 22,
no. 2, 1 February 2004 (2004-02-01), pages
469-477, XP011109862 ISSN: 0733-8724**

EP 2 183 625 B1

**Description**

This invention concerns improvements relating to waveguides. More particularly, the invention relates to waveguides terminated so as to be suitable for connection to other waveguides, or for coupling radiation into or out of the waveguide. The invention also relates to a method of terminating a waveguide, to a connector for a waveguide, and to a method of attaching a connector to a waveguide. The invention is concerned with photonic crystal fibre waveguides.

Photonic crystal fibres are optical fibres that have a core surrounded by a cladding region in which there is an array of holes that run along the length of the fibre. The core region typically has a diameter of ranging from 2 $\mu$m upwards, and the cladding region typically comprises holes having a diameter in the range from submicron to several microns. The overall diameter of the fibre depends on, for example, the core diameter and guiding properties, but typically may extend up to hundreds of microns. Typically, the holes are arranged to have a periodic structure when viewed in cross-section through the fibre. Such fibres can also be described in the art as "holey fibres" or "microstructured fibres".

In one type of photonic crystal fibre, known as 'holey fibre', guidance occurs as a result of the contrast between the core refractive index and the effective refractive index in the 'holey' material surrounding the core region. Light is thus guided along the fibre by refraction, as is the case in more standard optical fibres. In other photonic crystal fibres, the core is either of lower refractive index than the cladding, or is hollow. In these fibres, guidance occurs as a result of photonic bandgap effects arising from the periodicity of the hole structure. In both these types of photonic crystal fibre, the holes are key to the light-guiding properties of the fibre.

Photonic crystal fibres have been found to exhibit a number of advantageous properties in comparison to standard optical fibres, such as are disclosed by J. C. Knight, T. A. Birks, P. St. J. Russell, and D. M. Atkins in the paper "All-silica single-mode fiber with photonic crystal cladding", published in volume 21, Optics Letters, pages 1547 - 1549 (1996) and followed by the publication of an erratum in volume 22, Optics Letters, pages 484 - 485 (1997); and by T. A. Birks, J. C. Knight and P. St. J. Russell in the paper "Endlessly single-mode photonic crystal fibre", published in volume 22, Optics Letters, pages 961 - 963 (1997).

In order to make use of the advantageous properties of photonic crystal fibres, it is necessary to couple light into and out of such fibres. At an end-facet of a length of photonic crystal fibre, the holes that are necessary for guiding light along the core of the fibre are exposed to the ambient atmosphere. Ingress of moisture and debris can therefore occur. However, the presence of moisture and debris in the holes can alter the guiding properties of the photonic crystal fibre. For example, the refractive index of the holes may be altered, or they may become blocked with opaque material. In either event, the guiding properties of the photonic crystal fibre are adversely affected. Such problems are particularly severe where it is desired to attach a photonic crystal fibre to a connector, so that the fibre can be connected and disconnected at will. In these circumstances, the end-facet of the photonic crystal fibre is exposed to the atmosphere for some time, and the risk of the holes becoming fouled is unacceptably large.

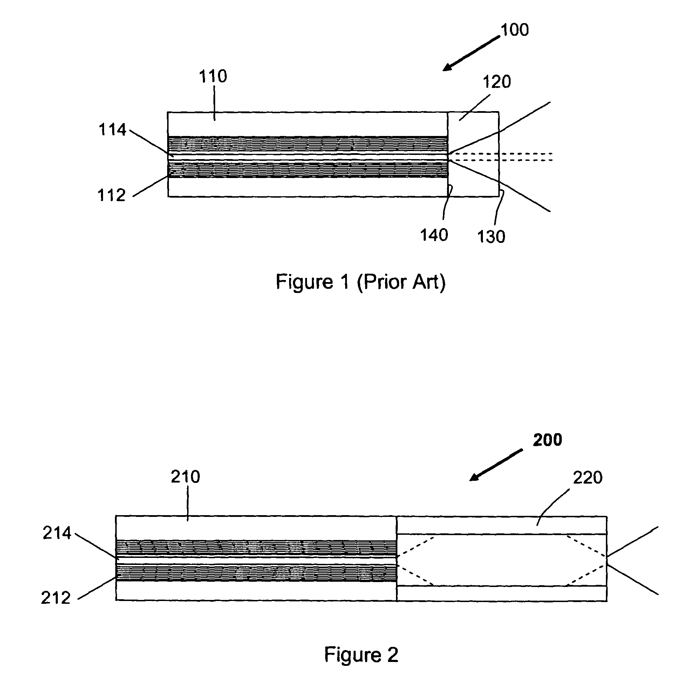

There are currently two known methods in which the above problems can be overcome. Either a short length of solid, coreless fibre is spliced directly onto the end of the photonic crystal fibre, or the end of the fibre is heated to a temperature near its melting point, causing the holes to collapse in the region near the end-facet of the photonic crystal fibre (see US 2007010443). In both cases, holes are not present in the region near the end of the resulting structure, as is illustrated schematically in Figure 1. Here, waveguide 100 comprises photonic crystal fibre 110 and a termination region 120. Fibre 110 has a cladding region 112, in which there is an array of holes running along the length of the fibre, and core region 114, along which light is guided. The holes in the cladding region 112 are sealed in the termination region 120. This termination region can be of order 50 $\mu$m to 2 mm long. Such solutions, however, retain a number of disadvantages, resulting from the fact that there exists a region of potentially uncertain length at the end of the fibre where the fibre has no light-guiding properties. Light in the photonic crystal fibre therefore diverges through this end region, and is output with a much larger beam diameter than that of radiation in transit through the fibre. This is illustrated schematically in Figure 1: the beam diameter at the plane labelled by reference numeral 130, where the beam is output from the waveguide, is significantly larger than that at the plane labelled by reference numeral 140, where the holes end. It is therefore impossible to efficiently butt-couple such fibres, since there is an inherent numerical aperture and field mode-mismatch. It is also more difficult to couple light efficiently into the fibre: the waist of the beam to be coupled into the fibre must be located at a distance inside the fibre, at a point where the guiding holes start, rather than at the end-facet of the fibre. Such problems are particularly apparent for photonic crystal fibres with smallest core regions, of order 1 $\mu$m to 5 $\mu$m. It is also known from US 20070104431 and W.S MOHAMMED et Al., J. of Lightwave Techn., Vol. 22 (2), (2004) to splice focusing or collimating lenses.

It is therefore an aim of the present invention to overcome, or at least partially mitigate, the above-identified problems. It is a further aim of the invention to provide a method of terminating a photonic crystal fibre that allows light to be efficiently coupled into photonic crystal fibres, and that enables such fibres to be butt-coupled without incurring such significant losses as are incurred using currently known techniques. It is a yet further aim of the invention to provide connectors suitable for photonic crystal fibres.

In accordance with a first aspect of the invention, there is provided a waveguide comprising photonic crystal fibre terminated by a multimode transmission device for use in connecting and disconnecting the fibre at will, wherein the multimode transmission device is configured such that, in use of the waveguide to guide light of a predetermined wavelength, a first light intensity distribution at a first end of the multimode transmission device comprises an image of a second light intensity distribution at the other end of the multimode transmission device, the image resulting from multimode interference in the multimode transmission device. The output of the multimode transmission device, or re-imaging device, is light intensity distribution that comprises an image of a light intensity distribution input into the re-imaging device. Therefore, where light is transmitted through a waveguide in accordance with the first aspect of the present invention, exiting through the re-imaging device that terminates the photonic crystal fibre, there is less divergence than would occur should the photonic crystal fibre be terminated by a non-guiding region in which the holes were sealed. Thus such waveguides can be butt-coupled more efficiently than has previously been possible using the above-described prior known techniques. Moreover, since the end-facet of the terminated waveguide is formed by the re-imaging device, moisture and other debris is prevented from entering the holes of the photonic crystal fibre, and the guiding properties of the photonic crystal fibre are preserved.

Multimode transmission devices are able to support the transmission of light in a plurality of spatial modes. Interference between the individual spatial modes can cause re-imaging of the input to the device.

Conveniently, the multimode transmission device may be a length of multimode fibre. Multimode fibre is readily commercially available in a number of standard sizes, so that waveguides according to the present invention can be used in combination with standard connectors. Advantageously, therefore, the present invention enables photonic crystal fibres to be used with standard connectors more efficiently than has previously been possible. For example, the terminated end of the waveguide may be housed within a ferrule, which ferrule is housed within a connector body. The ferrule may be positioned such that the terminated end of the waveguide is flush with one end of the ferrule. This facilitates butt coupling of the waveguides. The ferrule may be positioned such that the join between the photonic crystal fibre and the re-imaging device is housed within the ferrule. Such an arrangement advantageously strengthens the join between the photonic crystal fibre and the re-imaging device. Optionally, the ferrule is made of a material selected from the group consisting of ceramic, metallic, and zirconate materials.

The multimode fibre may be spliced onto the photonic crystal fibre. Preferably, the length of the multimode fibre is selected such that, in use of the waveguide to guide light of a predetermined wavelength, a first light intensity distribution at a first end of the multimode waveguide comprises an image of a second light intensity distribution at the other end of the multimode waveguide. The multimode transmission device may alternatively comprise any device able to guide a number of spatial modes of light and support multimode interference such that a multimode interference image can be formed. For example, rectangular or cubic devices, that are transparent at the operational wavelength of the waveguide, can be configured, by selection of appropriate dimensions, to support a number of spatial modes and exhibit the re-imaging property, and may also therefore be used as multimode transmission devices.

The output of the re-imaging device may be a one-to-one image of the input to the re-imaging device. Alternatively the output of the re-imaging device is a multiple image of the input to the re-imaging device. Thus the waveguide may be used either in combination with standard connectors, where a one-to-one image is formed, or, where a multiple image is formed, the waveguide can be used as an optical splitter.

The invention extends to a connector for a waveguide as described above, the connector comprising a connector body, and a ferrule configured to fit within the connector body and to accommodate both the re-imaging device and at least a part of the photonic crystal fibre.

According to a second aspect of the present invention, there is provided a pair of waveguides, each waveguide of the pair of waveguides being terminated by a multimode transmission device for use in connecting and disconnecting the waveguides at will, the dimensions of the multimode transmission devices being complimentary such that, when the pair of waveguides are connected together, the input to one of the pair of waveguides is a one-to-one re-image of the output of the other of the pair of waveguides, and such that, at the interface between the waveguides, a multiple image of the output of said one of the waveguides is formed. The waveguides each comprise photonic crystal fibre. It is expected that such pairs will find application where it is necessary to connect together waveguides used for transmitting high intensity light, since a reduced intensity is obtained at the interface between the two waveguides. Such a reduced intensity is expected to result in a reduction in the risk of damage to the interface caused by imperfections in the optical quality of the interface.

According to a third aspect of the present invention, there is provided a method of terminating a photonic crystal fibre comprising the step of attaching a multimode transmission device to a first end of the photonic crystal fibre for use in connecting and disconnecting the fibre at will. The multimode transmission device may be configured such that, in use of the terminated photonic crystal fibre to guide light of a predetermined wavelength, a first light intensity distribution at the output of the multimode transmission device comprises an image of a second light distribution at the first end of the photonic crystal fibre. The first light intensity distribution may be a one-to-one image of the second light intensity distribution. Alternatively, the first light intensity distribution may be a multiple image of the second light intensity distribution.

According to a fourth aspect of the present invention, there is provided a method of attaching a connector to a photonic crystal fibre so that the fibre can be connected and disconnected at will, the method comprising the steps of:

(i) terminating the photonic crystal fibre by splicing multimode fibre onto an end of the photonic crystal fibre to form a terminated photonic crystal fibre end;

(ii) locating a ferrule on the terminated photonic crystal fibre and such that there is a predetermined length of multimode fibre between the splice and the output end of the ferrule; and

(iii) locating the ferrule within a connector body.

The step (ii) may further comprise locating the ferrule such that a portion of the multimode fibre projects beyond the output end of the ferrule, and wherein the method further comprises the step of removing the portion of multimode fibre projecting beyond the output end of the ferrule such that the output end of the multimode fibre is flush with the output end of the ferrule. The predetermined length may be selected such that, in use of the photonic crystal fibre to guide light of a predetermined wavelength, a first light intensity distribution at the output end of the terminated photonic crystal fibre comprises an image of the light intensity distribution at the spliced end of the multimode fibre.

The above and further features of the invention are set forth with particularity in the appended claims and will be described hereinafter with reference to various exemplary embodiments and to the accompanying drawings in which:

Figure 1 illustrates light emanating from a photonic crystal fibre terminated in accordance with a prior known method;

Figure 2 illustrates a waveguide in accordance with a first embodiment of the invention;

Figures 3a to 3c illustrate a method of attaching a connector to a photonic crystal fibre in accordance with a further embodiment of the invention; and

Figure 4 is a photograph of a connector in accordance with a yet further embodiment of the invention.

The various embodiments to be described below each make use of a re-imaging property of multimode waveguide. Multimode waveguide, as opposed to single mode waveguide, is able to guide a number of different spatial modes. The re-imaging property results from multimode interference, and causes single and multiple images of the input to a multimode waveguide to appear at periodic intervals along the waveguide. The phenomenon is known, for example, from the paper "Optical Multi-Mode Interference Devices Based on Self-Imaging: Principles and Applications" by L. B. Soldano and E. C. M. Pennings, published in Journal of Lightwave Technology, Volume 13 pages 615 - 627 (1995). Each mode carried by such a waveguide will propagate with a different propagation constant, resulting in phase differences building up between the different modes. The re-imaging property can be analysed in terms of the variation of the propagation constant with mode number. More particularly, it can be shown that length $L_N$ of the multimode waveguide required in order for an image of order $N$ of the input to be formed at the output is:

$$L_N = \frac{n_1 W^2}{N\lambda} \qquad (1)$$

where $n_1$ is the refractive index of the core medium of the multimode waveguide, W is the width of the multimode core region and $\lambda$ is the wavelength of the radiation input into the multimode waveguide. Thus, a multimode waveguide of length $L_1$ will form a one-to-one image of its input at its output. A description of the re-imaging property can be found in the above-referenced paper.

This re-imaging property of multimode waveguides is used, in accordance with embodiments of the present invention, in conjunction with photonic crystal fibre. Figure 2 illustrates a waveguide 200 in accordance with an embodiment of the invention which comprises solid-core photonic crystal fibre 210 terminated by a length of multimode fibre 220. Fibre 210 has a cladding region 212, in which there is an array of holes running along the length of the fibre, and a core region 214, along which light is guided. Multimode fibre 220 can be attached to the photonic crystal fibre 210 by a splicing process, as is described in further detail below. However, it is notable that the holes of the photonic crystal fibre are not significantly damaged by the splicing process. Accordingly, therefore, the guiding properties of the photonic crystal fibre are not substantially affected by the termination. Light propagating through the fibre remains guided along substantially the full extent of the photonic crystal fibre, and through the length of multimode fibre. By selecting the dimensions of the multimode fibre using the formula (1) above, the output from the length of multimode fibre 220 can be arranged to comprise an image of the input to the multimode fibre. In the present embodiment, the dimensions of the multimode fibre 220 are selected such that the output of the multimode fibre is a one-to-one image of the output of the photonic crystal fibre 210. Since multimode fibre is commercially available in a number of standard widths, it is convenient to choose the length of the multimode fibre 220 to achieve the desired re-imaging.

For wavelengths in the range 400 nm to 1550 nm, where it is currently thought that most applications for photonic crystal fibre will be found, a suitable material for the multimode fibre 220 and photonic crystal fibre 210 is silica, which has a refractive index in the range from 1.44 to 1.47. Multimode fibre made from silica is commercially available with core sizes of 62.5 $\mu$m and 105 $\mu$m. The diameter of multimode fibre used is selected to achieve a good splice between the photonic crystal fibre 210 and the multimode fibre 220. The length of multimode fibre 220 required for the output of the fibre to comprise an image of the input to the fibre is dependent on the wavelength $\lambda$ of the input radiation. For a wavelength of 532 nm, obtained from a Coherent Inc. Verdi solid state (Nd:YVO$_4$) laser diode, and using commercially available silica multimode fibre of the above sizes, therefore, the length of the multimode fibre needed is either 10.7 mm (for 62.5 $\mu$m fibre) or 30.3 mm (for 105 $\mu$m core fibre). The tolerance for these lengths will depend on the re-image length achieved, which in turn will depend on the exact core size of the multimode fibre, and the operational wavelength. For the specific numeric examples given above, the tolerance on the re-image length is between 50 $\mu$m and 300 $\mu$m.

It is clear from the above that photonic crystal fibres terminated with multimode fibre in the manner of waveguide 200 will in general necessarily be configured specifically for one particular wavelength of light. Away from this wavelength, there will be losses at the termination where light is coupled into or out of the fibre. However, since as-supplied photonic crystal fibre is frequently optimised for transmission of a particular wavelength of light, it is not expected that the breadth of application of these waveguides will be limited in any substantial way because of the need to specify a particular wavelength at which the terminated waveguide is to be used. One exception is that such terminations will clearly not be appropriate where photonic crystal fibres are being used for ultra-broadband applications.

Multimode fibre 220 is joined to photonic crystal fibre 210 by splicing. Fusion splicing can be used to obtain a join of suitable quality. A fusion splice is effectively a "permanent weld" between two fibres. Very low insertion losses, typically less than 0.1 dB, can be achieved. Either filament-fusion splicing or arc-fusion splicing can be used. In both splicing techniques, care must be taken to ensure that the environment is clean so as to avoid ingress of foreign matter into the holes of the photonic crystal fibre.

The fibres to be spliced are first stripped of any protective polymer or acrylate coating, and cleaved, so as to leave bare fibre ends having a flat, clean end face. A length of multimode fibre much longer than that required for re-imaging is used, since, using conventional splicing machines, it is difficult to splice the required length onto a photonic crystal fibre. The fibres are located in clamps and aligned using a magnifying video camera. The fibre ends are then brought together, and heat is applied to the join region in the presence of a stream of argon gas. In the case of filament fusion splicing, heat is applied through use of a high power filament in close proximity to the join region. The fibre ends are heated to a temperature sufficient to soften the silica fibre ends without damaging the hole structure of the photonic crystal fibre. The applied heat may cause some deformation or collapse in the holes in the cladding region of the photonic crystal fibre 210, although such damage is small in comparison with that caused by the prior known hole-sealing techniques used to terminate photonic crystal fibres. A force is then applied to push the fibre ends together such that the fibres fuse. The Vytran FFS-200 is a commercially available filament fusion splicer that is suitable for carrying out the above process, and is able to carry out some of the above steps automatically. Finally, the multimode fibre is cut back to the required length.

Arc-fusion splicing can also be used to join together a length of photonic crystal fibre with a length of multimode fibre using a method similar to that described above. Arc-fusion splicers, such as the Fujikura Splice-Mate, use an electrical discharge to heat the fibre ends, and are also commercially available.

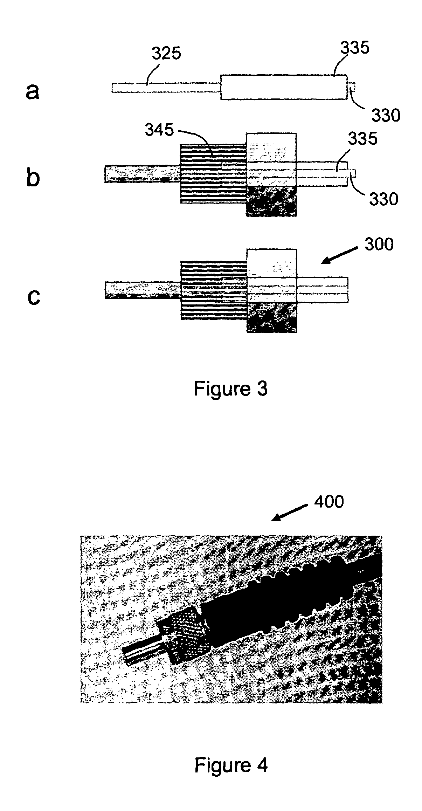

Terminated photonic crystal fibres such as waveguide 200 shown in Figure 2 can be used to make connectors for photonic crystal fibres. Figures 3 a - c illustrate steps in a method for making such connectors in accordance with an embodiment of the invention. Firstly, as is shown in Figure 3a, a terminated waveguide 325 is located and fixed, using standard glues or adhesives, into a ferrule 335. Ferrule 335 is preferably made from a ceramic material, but could also be made from other materials, for example those selected from the group consisting of ceramic, metallic, and zirconate materials, may also be used. Waveguide 325 comprises a photonic crystal fibre joined to a length of multimode fibre. The fibre is located such that a small portion 330 of the multimode fibre projects beyond the edge of the ferrule. As is shown in Figure 3b, the connector body 345 is then attached. Finally, the projecting portion 330 of the fibre is removed by polishing, to result in finished connector 300 as shown in Figure 3c. Here, the end of the terminated waveguide is flush with the end of the ferrule. The length of the multimode fibre attached to the photonic crystal fibre will therefore need to be slightly longer than the length determined through the formula (1) above, since the small portion 330 will be removed after the connector 300 is made. Thus, on placing the fibre 325 in the ferrule 335, the amount of fibre projecting beyond the ferrule end-face is selected such that the correct length of multimode fibre for re-imaging remains after polishing.

Figure 4 shows a photograph of a connector 400 for a photonic crystal fibre in accordance with an embodiment of the invention. Connector 400 is made using the method described above with reference to Figures 3 a - c, and is a standard SMA connector with a metallic ferrule. Terminated photonic crystal fibres according to embodiments of the invention can also be used with other standard connector bodies, such as FC/PC connectors.

It is preferable, in connector assemblies 300 and 400 described above, for the splice between the multimode fibre and the photonic crystal fibre to be within the ferrule. It is therefore further necessary to select the multimode fibre thickness so that the fibre assembly will fit into the ferrule, and so that there is sufficient adhesion between the fibre assembly and the ferrule. It is possible for ferrules to be customised in order to have appropriate dimensions. However, standard ferrules having a variety of hole diameters and a length of 12.7 mm are available. Thus it is preferable to use multimode fibre of width 62.5 μm, for which the one-to-one image length calculated from formula (1) above is 11 mm for radiation of wavelength 532 nm, since the standard length ferrule can be used. Moreover, it is also evident from (1) above that increasing the length of the multimode fibre relaxes the tolerance in that length.

Further embodiments of the present invention are envisaged that exploit the higher order images resulting from the multimode interference properties of waveguides in other ways. For example, those skilled in the art will appreciate that the re-imaging devices could be used to terminate photonic crystal fibres so as to provide optical splitters, where the re-imaging device is arranged such that its output comprises a multiple image of its input. It is currently envisaged that multimode waveguides with rectangular geometry would be most appropriate for such an application. Multimode waveguides having a rectangular geometry are expected to output discrete images of their input, as is necessary if the resulting structure is to be useful as an optical splitter. For example, for a rectangular waveguide having a core of height approximately equal to the diameter of the input PCF core, but with a greater width, and a length selected to produce a re-image in accordance with equation (1) above for $N = 2$, a double image of the input would be expected at the output end of the rectangular waveguide. Square waveguides will exhibit re-imaging in both directions perpendicular to the beam axis, so that, for $N = 2$ in equation (1) above, four images of the input beam will be formed. In the case of multimode fibre, or other waveguides of cylindrical geometry, higher order images of a single mode input are expected to be in the form of rings around a central peak. It will be noted that, whilst the size of the core of the multimode transmission device will be selected in dependence on the core size of the photonic crystal fibre, the overall dimensions of the multimode waveguide will be selected in order to achieve a good splice with the photonic crystal fibre.

The intensity profile of the beam will therefore vary significantly at higher order re-imaging points in dependence on a number of factors including the geometry of the multimode fibre. It may be possible to increase the on-axis intensity. Such an increased intensity will be advantageous in non-linear optics applications where high intensity beams are highly desirable. Alternatively, it may be possible that the maximum intensity of the beam is reduced. Such a reduced intensity would be advantageous where connections between different fibres carrying high energy beams are required, since, at high intensities, even small imperfections can result in severe damage to the optical system.

Such damage can frequently occur where high intensity beams impinge on connectors or lenses. Thus any reduction in the maximum intensity of a beam can be useful at connection points, particularly where the initial intensity of the beam can be regained after transmission through the connection. By exploiting a reduction in maximum intensity obtained as a result of using, as the connection interface, a point in a multimode fibre at which higher order re-images are obtained, the risk of such damage can be reduced. For example, R. M. Jenkins, R.W. J. Devereux, and J. M. Heaton, in their paper "Waveguide beam splitters and recombiners based on multimode propagation phenomena", published at page 991 of Optics Letters, Volume 14 (1992), propose a rectangular waveguide splitter in which an input beam is split into two. Modelling presented in that paper demonstrates a reduction in the intensity of the split beams in comparison to the input beam. By providing photonic crystal fibres terminated with lengths of such waveguide selected such that such a second order re-image is obtained at the output, the maximum intensity at any point on the connecting interface is reduced in comparison to the maximum intensity of the input beam. For high power beams (of the order of 100 W or greater), which photonic crystal fibres are often used to transmit, the reduction of maximum intensity obtained in such a way reduces the risk of damage occurring at the connection interface. The splicing of rectangular waveguide, of dimensions selected such that a second order re-image of the input is obtained at the output end, onto photonic crystal fibre, can therefore be used where high power beams are to be transmitted along the photonic crystal fibre.

Similarly, the third order re-image could be exploited. The third order re-image, for the above geometry, is expected to have a lower maximum intensity. However, the length of multimode waveguide required to obtain a third order re-image is one third that required to obtain a one-to-one re-image of the input beam. Thus, two photonic crystal fibres to be connected together are terminated by complimentary lengths of multimode waveguide: one photonic crystal fibre is terminated by a length of multimode fibre one-third that required to form a one-to-one re-image, and a photonic crystal fibre to which it is to be connected can be terminated by a length of multimode waveguide that is two-thirds that required to form a one-to-one re-image. To ensure the correct terminations are combined, it is desirable to form the terminated ends in male and female connectors. Higher order re-images could also be used. As those skilled in the art will appreciate, such applications are not restricted to connecting photonic crystal fibres, but will be of use wherever high power laser beams are transmitted along waveguides.

Having described the invention with reference to various specific embodiments, it is noted that these embodiments are purely exemplary, and that variations and modifications to these embodiments are possible without departing from the scope of the invention, which is defined in the appended claims. For example, whilst it has been described above to use photonic crystal fibres and multimode fibres fabricated from silica for use at wavelengths of or around 532 nm, it will be immediately obvious to those skilled in the art that the invention extends to other wavelength ranges, in which it may be necessary to use fibres fabricated from materials other than silica. In particular, for operation at longer wavelengths, such as between 2 $\mu$m and 4 $\mu$m, photonic crystal fibres and multimode fibres fabricated from telluride, fluoride or chalcogenide glasses can be used.

Moreover, those skilled in the art will immediately realise that, whilst the use of solid-core photonic crystal fibres has been described above, it will also be possible to apply the inventive concepts described to hollow-core photonic crystal fibres. In such embodiments, hollow-core waveguides are used to form the re-imaging multimode transmission region. Those skilled in the art will appreciate that it will be necessary to incorporate a window into the waveguide at some point in order to seal the holes of the photonic crystal fibre - for example, at the outer end of the multimode hollow-core waveguide. Those skilled in the art will also realise that, whilst in the above it has been described to use multimode fibre to provide the re-imaging device, any multimode transmission device capable of supporting multimode interference and re-imaging can be used in conjunction with the present invention, such as multimode waveguides of other geometries. Such multimode transmission devices could include square or rectangular waveguides. Moreover, any re-imaging device operable to reproduce its optical input at its output could be used to terminate photonic crystal fibres in accordance with the invention.

It is also to be clearly understood that any feature described above in relation to any one embodiment may be used alone, or in combination with other features described, and may also be used in combination with one or more features of any other of the embodiments, or any combination of any other of the embodiments.

**Claims**

1. A waveguide comprising photonic crystal fibre terminated by a multimode transmission device for use in connecting and disconnecting the fibre at will, wherein the multimode transmission device is configured such that, in use of the waveguide to guide light of a predetermined wavelength, a first light intensity distribution at a first end of the multimode transmission device comprises an image of a second light intensity distribution at the other end of the multimode transmission device, the image resulting from multimode interference in the multimode transmission device.

2. A waveguide as claimed in claim 1, wherein the multimode transmission device is a length of multimode fibre.

3. A waveguide as claimed in claim 2, wherein the multimode fibre is spliced onto the photonic crystal fibre.

4. A waveguide as claimed in any preceding claim, wherein the output of the multimode transmission device is a one-to-one image of the input to the multimode transmission device.

5. A waveguide as claimed in any one of claims 1 to 3, wherein the output of the multimode transmission device is a multiple image of the input to the multimode transmission device.

6. A waveguide as claimed in any preceding claim, wherein the terminated end of the waveguide is housed within a ferrule, which ferrule is housed within a connector body.

7. A waveguide as claimed in claim 6, wherein the ferrule is positioned such that the terminated end of the waveguide is flush with one end of the ferrule.

8. A waveguide as claimed in claim 6 or claim 7, wherein the ferrule is positioned such that the join between the photonic crystal fibre and the multimode transmission device is housed within the ferrule.

9. A waveguide as claimed in any of claims 6 to 8, wherein the ferrule is made of a material selected from the group consisting of ceramic, metallic, and zirconate materials.

10. A connector for a waveguide as claimed in any one of claims 1 to 5, the connector comprising a connector body, and a ferrule configured to fit within the connector body and to accommodate both the multimode transmission device and at least a part of the photonic crystal fibre.

11. A pair of waveguides, each waveguide of the pair of waveguides being as claimed in claim 1, wherein the dimensions of the multimode transmission devices being complimentary such that, as a result of multimode interference in the multimode transmission devices, when the pair of waveguides are connected together, the input to one of the photonic crystal fibres is a one-to-one re-image of the output of the other of the photonic crystal fibres, and such that, at the interface between the waveguides, a multiple image of the output of said one of the waveguides is formed as a result of multimode interference in the multimode transmission devices.

12. A method of terminating a photonic crystal fibre comprising the step of attaching a multimode transmission device to a first end of the photonic crystal fibre for use in connecting and disconnecting the fibre at will, wherein the multimode transmission device is configured such that, in use of the terminated photonic crystal fibre to guide light of a predetermined wavelength, a first light intensity distribution at the output of the multimode transmission device comprises an image of a second light distribution at the first end of the photonic crystal fibre.

13. A method as claimed in claim 12, wherein the first light intensity distribution is a one-to-one image of the second light intensity distribution.

14. A method as claimed in claim 12, wherein the first light intensity distribution is a multiple image of the second light intensity distribution.

15. A method of attaching a connector to a photonic crystal fibre for use in connecting and disconnecting the fibre at will, the method comprising the steps of:

(i) terminating the photonic crystal fibre by splicing multimode fibre onto an end of the photonic crystal fibre to form a terminated photonic crystal fibre end;
(ii) locating a ferrule on the terminated photonic crystal fibre and such that there is a predetermined length of multimode fibre between the splice and the output end of the ferrule wherein the predetermined length is selected such that, in use of the photonic crystal fibre to guide light of a predetermined wavelength, a first light intensity distribution at the output end of the terminated photonic crystal fibre comprises an image of the light intensity distribution at the spliced end of the multimode fibre, the image being formed as a result of multimode interference in the multimode transmission device; and
(iii) locating the ferrule within a connector body.

16. A method as claimed in claim 15, wherein the step (ii) further comprises locating the ferrule such that a portion of the multimode fibre projects beyond the output end of the ferrule, and wherein the method further comprises the step of removing the portion of multimode fibre projecting beyond the output end of the ferrule such that the output end of the multimode fibre is flush with the output end of the ferrule.

**Patentansprüche**

1. Ein Wellenleiter, der eine photonische Kristallfaser beinhaltet, die durch eine Multimode-Übertragungsvorrichtung zur Verwendung zum beliebigen Verbinden und Trennen der Faser abgeschlossen ist, wobei die Multimode-Übertragungsvorrichtung so konfiguriert ist, dass bei Verwendung des Wellenleiters, um Licht von einer vorher festgelegten Wellenlänge zu leiten, eine erste Lichtintensitätsverteilung an einem ersten Ende der Multimode-Übertragungsvorrichtung eine Abbildung einer zweiten Lichtintensitätsverteilung an dem anderen Ende der Multimode-Übertragungsvorrichtung beinhaltet, wobei die Abbildung aus einer Multimode-Interferenz in der Multimode-Übertragungsvorrichtung resultiert.

2. Wellenleiter gemäß Anspruch 1, wobei die Multimode-Übertragungsvorrichtung eine Länge Multimode-Faser ist.

3. Wellenleiter gemäß Anspruch 2, wobei die Multimode-Faser auf die photonische Kristallfaser gespleißt ist.

4. Wellenleiter gemäß einem der vorhergehenden Ansprüche, wobei die Ausgabe der Multimode-Übertragungsvorrichtung eine Eins-zu-eins-Abbildung der Eingabe in die Multimode-Übertragungsvorrichtung ist.

5. Wellenleiter gemäß einem Ansprüche 1 bis 3, wobei die Ausgabe der Multimode-Übertragungsvorrichtung eine Mehrfachabbildung der Eingabe in die Multimode-Übertragungsvorrichtung ist.

6. Wellenleiter gemäß einem der vorhergehenden Ansprüche, wobei das abgeschlossene Ende des Wellenleiters innerhalb einer Hülse untergebracht ist, wobei die Hülse innerhalb eines Verbinderkörpers untergebracht ist.

7. Wellenleiter gemäß Anspruch 6, wobei die Hülse so positioniert ist, dass das abgeschlossene Ende des Wellenleiters mit einem Ende der Hülse bündig ist.

8. Wellenleiter gemäß Anspruch 6 oder Anspruch 7, wobei die Hülse so positioniert ist, dass die Fügungsstelle zwischen der photonischen Kristallfaser und der Multimode-Übertragungsvorrichtung innerhalb der Hülse untergebracht ist.

9. Wellenleiter gemäß einem der Ansprüche 6 bis 8, wobei die Hülse aus einem Material hergestellt ist, das aus der Gruppe, die aus Keramik-, Metall- und Zirkonatmaterialien besteht, ausgewählt ist.

10. Ein Verbinder für einen Wellenleiter gemäß einem der Ansprüche 1 bis 5, wobei der Verbinder einen Verbinderkörper und eine Hülse beinhaltet, die konfiguriert ist, um innerhalb des Verbinderkörpers zu passen und um sowohl die Multimode-Übertragungsvorrichtung als auch mindestens einen Teil der photonischen Kristallfaser aufzunehmen.

11. Ein Paar Wellenleiter, wobei jeder Wellenleiter des Paars Wellenleiter wie in Anspruch 1 beansprucht ist, wobei die Abmessungen der Multimode-Übertragungsvorrichtungen komplementär sind, so dass als ein Resultat der Multimode-Interferenz in den Multimode-Übertragungsvorrichtungen, wenn das Paar Wellenleiter miteinander verbunden ist, die Eingabe in eine der photonischen Kristallfasern eine Eins-zu-eins-Neuabbildung der Ausgabe der anderen der photonischen Kristallfasern ist und so dass an der Schnittstelle zwischen den Wellenleitern eine Mehrfachabbildung der Ausgabe des einen der Wellenleiter als ein Resultat von Multimode-Interferenz in den Multimode-Übertragungsvorrichtungen gebildet wird.

12. Ein Verfahren zum Abschließen einer photonischen Kristallfaser, das den Schritt des Anbringens einer Multimode-Übertragungsvorrichtung an einem ersten Ende der photonischen Kristallfaser zur Verwendung zum beliebigen Verbinden und Trennen der Faser beinhaltet, wobei die Multimode-Übertragungsvorrichtung so konfiguriert ist, dass bei Verwendung der abgeschlossenen photonischen Kristallfaser, um Licht von einer vorher festgelegten Wellenlänge zu leiten, eine erste Lichtintensitätsverteilung an der Ausgabe der Multimode-Übertragungsvorrichtung eine Abbildung einer zweiten Lichtintensitätsverteilung an dem ersten Ende der photonischen Kristallfaser beinhaltet.

13. Verfahren gemäß Anspruch 12, wobei die erste Lichtintensitätsverteilung eine Eins-zu-eins-Abbildung der zweiten Lichtintensitätsverteilung ist.

14. Verfahren gemäß Anspruch 12, wobei die erste Lichtintensitätsverteilung eine Mehrfachabbildung der zweiten Lichtintensitätsverteilung ist.

15. Ein Verfahren zum Anbringen eines Verbinders an einer photonischen Kristallfaser zur Verwendung zum beliebigen Verbinden und Trennen der Faser, wobei das Verfahren die folgenden Schritte beinhaltet:

    (i) Abschließen der photonischen Kristallfaser durch Spleißen einer Multimode-Faser auf ein Ende der photonischen Kristallfaser, um ein abgeschlossenes Ende der photonischen Kristallfaser zu bilden;
    (ii) Anordnen einer Hülse auf der abgeschlossenen photonischen Kristallfaser, und so dass sich eine vorher festgelegte Länge Multimode-Faser zwischen der Spleißung und dem Ausgabeende der Hülse befindet, wobei die vorher festgelegte Länge so ausgewählt ist, dass bei Verwendung der photonischen Kristallfaser, um Licht von einer vorher festgelegten Wellenlänge zu leiten, eine erste Lichtintensitätsverteilung an dem Ausgabeende der abgeschlossenen photonischen Kristallfaser eine Abbildung der Lichtintensitätsverteilung an dem gespleißten Ende der Multimode-Faser beinhaltet, wobei die Abbildung als ein Resultat von Multimode-Interferenz in der Multimode-Übertragungsvorrichtung gebildet wird; und
(iii) Anordnen der Hülse innerhalb eines Verbinderkörpers.

16. Verfahren gemäß Anspruch 15, wobei der Schritt (ii) ferner das Anordnen der Hülse, so dass ein Abschnitt der Multimode-Faser über das Ausgabeende der Hülse hinausragt, beinhaltet und wobei das Verfahren ferner den Schritt des Entfernens des Abschnitts der Multimode-Faser, der über das Ausgabeende der Hülse hinausragt, so dass das Ausgabeende der Multimode-Faser mit dem Ausgabeende der Hülse bündig ist, beinhaltet.

## Revendications

1. Un guide d'ondes comprenant une fibre à cristal photonique terminée par un dispositif de transmission multimode destiné à être utilisé pour connecter et déconnecter la fibre à volonté, dans lequel le dispositif de transmission multimode est configuré de telle sorte que, lors de l'utilisation du guide d'ondes pour guider de la lumière d'une longueur d'onde prédéterminée, une première distribution d'intensité de lumière à une première extrémité du dispositif de transmission multimode comprenne une image d'une deuxième distribution d'intensité de lumière à l'autre extrémité du dispositif de transmission multimode, l'image résultant d'une interférence multimode dans le dispositif de transmission multimode.

2. Un guide d'ondes tel que revendiqué dans la revendication 1, dans lequel le dispositif de transmission multimode est une longueur de fibre multimode.

3. Un guide d'ondes tel que revendiqué dans la revendication 2, dans lequel la fibre multimode est épissée sur la fibre à cristal photonique.

4. Un guide d'ondes tel que revendiqué dans n'importe quelle revendication précédente, dans lequel la sortie du dispositif de transmission multimode est une image biunivoque de l'entrée dans le dispositif de transmission multimode.

5. Un guide d'ondes tel que revendiqué dans n'importe laquelle des revendications 1 à 3, dans lequel la sortie du dispositif de transmission multimode est une image multiple de l'entrée dans le dispositif de transmission multimode.

6. Un guide d'ondes tel que revendiqué dans n'importe quelle revendication précédente, dans lequel l'extrémité terminée du guide d'ondes est logée au sein d'une ferrule, laquelle ferrule est logée au sein d'un corps de connecteur.

7. Un guide d'ondes tel que revendiqué dans la revendication 6, dans lequel la ferrule est positionnée de telle sorte que l'extrémité terminée du guide d'ondes soit de niveau avec une extrémité de la ferrule.

8. Un guide d'ondes tel que revendiqué dans la revendication 6 ou la revendication 7, dans lequel la ferrule est positionnée de telle sorte que le joint entre la fibre à cristal photonique et le dispositif de transmission multimode soit logé au sein de la ferrule.

9. Un guide d'ondes tel que revendiqué dans n'importe lesquelles des revendications 6 à 8, dans lequel la ferrule est réalisée en un matériau sélectionné dans le groupe consistant en matériaux céramique, métallique et zirconate.

10. Un connecteur pour un guide d'ondes tel que revendiqué dans n'importe laquelle des revendications 1 à 5, le connecteur comprenant un corps de connecteur, et une ferrule configurée pour s'emboîter dans le corps de connecteur et pour accueillir à la fois le dispositif de transmission multimode et au moins une partie de la fibre à cristal photonique.

11. Une paire de guides d'ondes, chaque guide d'ondes de la paire de guides d'ondes étant tel que revendiqué dans la revendication 1, dans laquelle les dimensions des dispositifs de transmission multimodes sont complémentaires de telle sorte que, en résultat de l'interférence multimode dans les dispositifs de transmission multimodes, lorsque la paire de guides d'ondes sont connectés ensemble, l'entrée dans l'une des fibres à cristaux photoniques soit une reimage biunivoque de la sortie de l'autre des fibres à cristaux photoniques, et de telle sorte que, à l'interface entre les guides d'ondes, une image multiple de la sortie dudit un des guides d'ondes soit formée en résultat de l'interférence multimode dans les dispositifs de transmission multimodes.

12. Une méthode pour terminer une fibre à cristal photonique comprenant l'étape consistant à attacher un dispositif de transmission multimode à une première extrémité de la fibre à cristal photonique destiné à être utilisé pour connecter et déconnecter la fibre à volonté, dans laquelle le dispositif de transmission multimode est configuré de telle sorte que, lors de l'utilisation de la fibre à cristal photonique terminée pour guider de la lumière d'une longueur d'onde prédéterminée, une première distribution d'intensité de lumière à la sortie du dispositif de transmission multimode comprenne une image d'une deuxième distribution de lumière à la première extrémité de la fibre à cristal photonique.

13. Une méthode telle que revendiquée dans la revendication 12, dans laquelle la première distribution d'intensité de lumière est une image biunivoque de la deuxième distribution d'intensité de lumière.

14. Une méthode telle que revendiquée dans la revendication 12, dans laquelle la première distribution d'intensité de lumière est une image multiple de la deuxième distribution d'intensité de lumière.

15. Une méthode pour attacher un connecteur à une fibre à cristal photonique destiné à être utilisé pour connecter et déconnecter la fibre à volonté, la méthode comprenant les étapes consistant à :

   (i) terminer la fibre à cristal photonique en épissant la fibre multimode sur une extrémité de la fibre à cristal photonique pour former une extrémité de fibre à cristal photonique terminée ;
   (ii) placer une ferrule sur la fibre à cristal photonique terminée et de telle sorte qu'il y ait une longueur prédéterminée de fibre multimode entre l'épissure et l'extrémité de sortie de la ferrule dans laquelle la longueur prédéterminée est sélectionnée de telle sorte que, lors de l'utilisation de la fibre à cristal photonique pour guider de la lumière d'une longueur d'onde prédéterminée, une première distribution d'intensité de lumière à l'extrémité de sortie de la fibre à cristal photonique terminée comprenne une image de la distribution d'intensité de lumière à l'extrémité épissée de la fibre multimode, l'image étant formée en résultat de l'interférence multimode dans le dispositif de transmission multimode ; et
   (iii) placer la ferrule au sein d'un corps de connecteur.

16. Une méthode telle que revendiquée dans la revendication 15, dans laquelle l'étape (ii) comprend en outre le fait de placer la ferrule de telle sorte qu'une portion de la fibre multimode fasse saillie au-delà de l'extrémité de sortie de la ferrule, la méthode comprenant en outre l'étape consistant à retirer la portion de fibre multimode faisant saillie au-delà de l'extrémité de sortie de la ferrule de telle sorte que l'extrémité de sortie de la fibre multimode soit de niveau

**EP 2 183 625 B1**

avec l'extrémité de sortie de la ferrule.

Figure 1 (Prior Art)

Figure 2

EP 2 183 625 B1

Figure 3

Figure 4

13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007010443 A
- US 20070104431 A

### Non-patent literature cited in the description

- **J. C. KNIGHT ; T. A. BIRKS ; P. ST. J. RUSSELL ; D. M. ATKINS.** All-silica single-mode fiber with photonic crystal cladding. *Optics Letters,* 1996, vol. 21, 1547-1549
- **T. A. BIRKS ; J. C. KNIGHT.** *Optics Letters,* 1997, vol. 22, 484-485
- **P. ST. J. RUSSELL.** Endlessly single-mode photonic crystal fibre. *Optics Letters,* 1997, vol. 22, 961-963
- **W.S MOHAMMED et al.** *J. of Lightwave Techn.,* 2004, vol. 22 (2
- **L. B. SOLDANO ; E. C. M. PENNINGS.** Optical Multi-Mode Interference Devices Based on Self-Imaging: Principles and Applications. *Journal of Lightwave Technology,* 1995, vol. 13, 615-627
- **R. M. JENKINS ; R.W. J. DEVEREUX ; J. M. HEATON.** Waveguide beam splitters and recombiners based on multimode propagation phenomena. *Optics Letters,* 1992, vol. 14, 991